Europäisches Patentamt

European Patent Office

Office européen des brevets

(19)

(11) **EP 0 529 351 B1**

(12) **EUROPÄISCHE PATENTSCHRIFT**

(45) Veröffentlichungstag und Bekanntmachung des
Hinweises auf die Patenterteilung:
**02.01.1997  Patentblatt 1997/01**

(51) Int Cl.⁶: **H04L 12/56**, H04Q 11/04

(21) Anmeldenummer: **92113219.7**

(22) Anmeldetag: **03.08.1992**

(54) **Anordnung zur Bitratenüberwachung in ATM-Netzen**

Arrangement for monitoring the bit rate in ATM-networks

Dispositif pour surveiller le débit binaire dans des réseaux-ATM

(84) Benannte Vertragsstaaten:
**AT BE CH DE FR GB IT LI NL SE**

(30) Priorität: **27.08.1991  DE 4128411**

(43) Veröffentlichungstag der Anmeldung:
**03.03.1993   Patentblatt 1993/09**

(73) Patentinhaber: **SIEMENS
AKTIENGESELLSCHAFT
80333 München (DE)**

(72) Erfinder: **Kammerl, Anton, Dr.
W-8038 Gröbenzell (DE)**

(56) Entgegenhaltungen:
• **INTERNATIONAL JOURNAL OF DIGITAL AND
ANALOG COMMUNICATION SYSTEMS Bd. 3 ,
1990 Seiten 187 - 197 G.NIESTEGGE 'The "leaky
Bucket" Policing Method in the ATM
(Asynchronous Transfer Mode) Network'**
• **ACM TRANSACTIONS ON COMPUTER
SYSTEMS Bd. 9, Nr. 2 , Mai 1991 , NEW YORK US
Seiten 101 - 124 L. ZHANG 'VirtualClock: A New
Traffic Control Algorithm for Packet-Switched
Networks'**
• **NEC RESEARCH AND DEVELOPMENT Bd. 32,
Nr. 3 , Juli 1991 , TOKYO JP Seiten 379 - 388 T.
MURASE ET AL. 'Constant bit rate services in
ATM Networks'**

EP 0 529 351 B1

**Beschreibung**

In neueren Enwicklungen der Fernmeldetechnik - und hier in der Entwicklung diensteintegrierender Breitbandnetze (B-ISDN) - spielt der auf asynchroner Zeitmultiplextechnik basierende Asynchrone Transfer-Modus (ATM) eine wesentliche Rolle, demzufolge die Signalübertragung in einem Bitstrom vor sich geht, der den - jeweils aus Kopf und Nutzinformationsteil bestehende - Zellen konstanter Länge von z.B. 53 Oktetts unterteilt ist, die je nach Bedarf mit paketierten Nachrichten belegt werden; ist gerade keine Nutzinformation zu übermitteln, so werden spezielle Leerzellen übertragen. In ATM-Vermittlungsstellen werden virtuelle Verbindungen aufgebaut, d.h. Verbindungen, die nur dann einen Wegeabschnitt tatsächlich benutzen, wenn über diesen tatsächlich ein Nachrichtenpaket (Block) zu übermitteln ist, wobei jedes Paket in seinem Kopf u.a. eine z.B. 2 Oktetts umfassende Adresse zur eindeutigen Zuordnung des Pakets zu einer bestimmten virtuellen Verbindung enthält. Dabei kann jedes Paket am Eingang zur Koppelanordnung nach Maßgabe der jeweiligen Wahlinformation die komplette Information für seinen Weg durch die Koppelanordnung erhalten; mit Hilfe dieser Information schalten die Koppelelemente dann das Paket auf dem festgelegten Weg selbst durch (self-routing network) (siehe z.B. telcom report 11(1988)6, 210...213).

Ein ATM-Netz bietet dem Teilnehmer eine sehr hohe maximale Bitrate $r_{max}$ von z.B. 150 Mbit/s, wobei jedoch, abhängig vom jeweiligen ATM-Dienst, vom Teilnehmer vielfach nur ein Teil der angebotenen Bitrate genutzt werden wird, und zwar

- in sog. CBR(Constant Bit Rate)-Verbindungen in Form der konstanten Bitrate $r_c$ (von z.B. 2 Mbit/s),
- in sog. VBR(Variable Bit Rate)-Verbindungen in Form der Durchschnitts-(average-)Bitrate $r_a$ (von z. B. 5 Mbit/s) und der Spitzen-(peak-)Bitrate $r_p$ (von z.B. 30 Mbit/s).

Beim Verbindungsaufbau werden die jeweils gewünschten Verkehrsparameter ausgehandelt und ggf. festgelegt; in einer Verbindungsannahmesteuereinrichtung wird dabei entschieden, ob die augenblicklich verfügbare Netzkapazität ausreicht, eine gewünschte virtuelle Verbindung herzustellen.
Nach der Herstellung der virtuellen Verbindung werden die ausgehandelten Verkehrsparameter in einer Bitratenüberwachungseinrichtung (Policing Unit) kontrolliert. Wird der ausgehandelte Wert überschritten, so werden die überschießenden ATM-Zellen eliminiert; es ist aber auch möglich, die überschießenden ATM-Zellen zu markieren, so daß sie im Netz noch nachträglich, falls es zu Verkehrsstauungen kommt, als ATM-Zellen niedriger Priorität eliminiert werden können.
Die Bitratenüberwachung geschieht üblicherweise nach dem sog. Leaky-Bucket-Prinzip (siehe z.B. Niestegge: The "Leaky Bucket" Policing Method in the ATM (Asynchronous Transfer Mode) Network, INTERNATIONAL JOURNAL OF DIGITAL AND ANALOG COMMUNICATION SYSTEMS, VOL.3 (1990), 187...197):
Bei jedem Empfang einer ATM-Zelle wird der Stand eines Zählers um eine Stelle erhöht (inkrementiert), und abhängig von den ausgehandelten Verkehrsparametern wird der Zählerstand in bestimmten Abständen T um d Stellen vermindert (dekrementiert). Dabei wird weder der Zählerstand 0 unterschritten noch wird eine Zählerstandsschwelle S überschritten; bei Erreichen der Schwelle werden die überschießenden ATM-Zellen eliminiert bzw. markiert.
Hält sich der Teilnehmer an die ausgehandelte Bitrate r = $B_z$·d/T, worin $B_z$ die Anzahl der (Nutzsignal-)Bits je ATM-Zelle, d der Dekrementierungswert und T die Dekrementierungsperiode ist, so wird der Zähler durch das Dekrementieren immer wieder auf den Zählerstand 0 gebracht; überschreitet der Teilnehmer die festgelegte Bitrate r, so wird trotz der Dekrementierung sehr schnell der Ansprechschwellwert S erreicht.

Bis zum Erreichen des Ansprechschwellwerts S läßt die Leaky-Bucket-Methode ein kurzzeitiges Überschreiten der vereinbarten Bitrate zu: So werden, ausgehend vom Zählerstand 0, zunächst S ATM-Zellen in ununterbrochener Folge (d.h. ohne Leerzellen oder zu anderen Verbindungen gehörende Zellen) von der Leaky-Bucket-Einheit durchgelassen, bis der Ansprechschwellwert S des Zählers erreicht ist. Wenn unmittelbar vor diesem Erreichen der Zählerstand um einen Wert d dekrementiert wird, so können weitere d ATM-Zellen passieren; wenn der Zählerstand bis zum Erreichen des Ansprechschwellwerts S mehrmals dekrementiert worden ist, erhöht sich die Zahl durchgelassener ATM-Zellen entsprechend weiter.
Die maximal mögliche Anzahl von ATM-Zellen in einem sog. full-rate-burst, bei dem die maximale Bitrate von z. B. 150 Mbit/s auftritt, ist dann $n_{max}$ = S + k·d mit k = 1 + $\lceil$ (S-d)/((T/$t_z$)-d) $\rceil$ worin $t_z$ die Dauer einer ATM-Zelle bei der maximalen Ubertragungsgeschwindigkeit ist und $\lceil$ ... $\rceil$ bedeutet, daß von dem in $\lceil$ ... $\rceil$ stehenden Ausdruck nur der ganzzahlige Anteil relevant ist.

Eine Aufgabe der Bitratenüberwachung ist es, die Länge solcher full-rate-bursts zu begrenzen, weil full-rate-bursts die Wahrscheinlichkeit eines Pufferüberlaufs im ATM-Netzwerk erhöhen. Aus diesem Grunde sollte der Ansprechschwellwert S so klein wie möglich sein.
Bei zu kleinem Ansprechschwellwert könnte es andererseits aber vorkommen, daß Teilnehmern, die sich bezüglich der angemeldeten Bitrate wohlverhalten, ungerechtfertigterweise trotzdem ATM-Zellen eliminiert werden, und zwar bedingt durch Wartezeitjitter, d.h. durch in Warteschlangen entstehende variable Verzögerungen.

Im Anschlußbereich sei beispielsweise eine variable Verzögerung δ von z.B. 0,2 ms zugelassen, wobei die Überschreitungswahrscheinlichkeit $10^{-10}$ sein darf. Daraus folgt, daß nach Auftreten dieser Verzögerung der Leaky-Bucket-Zähler den Ansprechschwellwert S noch nicht erreicht haben darf. Der gerade noch zulässige Zählerstand n = S - 1 ergibt sich aus den im Zeitabschnitt $\delta$ + T in der Leaky-Bucket-Einheit empfangenen ATM-Zellen, deren Anzahl = d + $\delta \cdot r/B_z$ ist; hierbei wird davon ausgegangen, daß während der Verzögerungszeitspanne $\delta$ der Zählerstand auf n = 0 dekrementiert wurde und daß (im ungünstigsten Fall) unmittelbar vor Eintreffen des verzögerten ATM-Zellen-Bündels ein Dekrementiervorgang stattfindet. Damit gilt dann S = 1 + d + $\lceil \delta \cdot r/B_z \rfloor$ (siehe auch Niestegge, a.a.O., Gl.(6)). Wird S so festgelegt, so bleibt die Wahrscheinlichkeit für ein ungerechtfertigtes Eliminieren von ATM-Zellen unter dem Wert $10^{-10}$. Beispiele für Parameterwerte r, T, $\delta$, S, $n_{max}$ finden sich beispielsweise bei Niestegge, a.a.O., Tabellen I und II.

Über das im vorstehenden umrissene einfache Leaky-Bucket-Verfahren hinausgehend werden z.Zt. Policing-Methoden bevorzugt, die von einem sog. Dual-Leaky-Bucket-Prinzip Gebrauch machen. Dazu ist eine Kette von zwei Leaky-Bucket-Einheiten vorgesehen, wobei mittels der ersten Leaky-Bucket-Einheit die Spitzenbitrate $r_p = B_z \cdot d_1/T_1$ (mit $B_z$ = Anzahl der Bits je ATM-Zelle, $d_1$ = Dekrementierungswert und $T_1$ = Dekrementierungsperiode der ersten Leaky-Bucket-Einheit) überwacht und die bis zum Ansprechen der ersten Leaky-Bucket-Einheit maximal mögliche Anzahl $n_{max} = S_1 + k \cdot d_1$ (mit k = 1 + $\lceil (S_1-d_1)/((T_1/t_z)-d_1) \rfloor$, $S_1$ = Ansprechschwellwert der ersten Leaky-Bucket-Einheit, $t_z$ = Dauer einer ATM-Zelle bei maximaler Übertragungsgeschwindigkeit) von ATM-Zellen in einem sog. full-rate-burst festgelegt wird;
mittels einer zweiten Leaky-Bucket-Einheit wird die mittlere Bitrate $r_a = B_z \cdot d_2/T_2$ (mit $d_2$ = Dekrementierungswert und $T_2$ = Dekrementierungsperiode der zweiten Leaky-Bucket-Einheit) überwacht, und es wird die maximale Dauer $t_{max} \approx S_2 \cdot B_z/(r_p-r_a)$ eines Bursts mit der Spitzenbitrate $r_p$ (peak-rate-burst) (mit $S_2$ = Ansprechschwellwert der zweiten Leaky-Bucket-Einheit) festgelegt (Niestegge, a.a.O., Kap. 4.2).
Für diese Aufgaben muß die zweite Leaky-Bucket-Einheit träge reagieren bzw. mit einem sehr hohen Schwellwert $S_2$ arbeiten; ist ein Dienst beispielsweise definiert mit $r_a$ = 2 Mbit/s, $r_p$ = 10 Mbit/s und $t_{max}$ = 2 s, so ergibt sich (bei $B_z$ = 48.8 = 384) für $S_2$ ein Wert von etwa 40000. Dabei wird eine unerlaubte Erhöhung der Durchschnittsbitrate $r_a$ auf z.B. 2,5 oder 3 oder 4 oder 6 Mbit/s erst sehr spät, im Beispiel nach 32 bzw. 16 bzw. 8 bzw. 4 s erkannt, wobei etwa 40000 ATM-Zellen zuviel übertragen werden.

Nachteilig ist andererseits ein relativ häufiges ungerechtfertigtes Eliminieren bzw. Markieren von ATM-Zellen bei der $t_{max}$-Überwachung: Hält sich die Bitrate vor einer Bitratenspitze längere Zeit bei dem festgelegten Wert $r_a$ für die mittlere Bitrate, so wird der Zähler der zweiten Leaky-Bucket-Einheit durch das Dekrementieren etwa auf dem Zählerstand 0 gehalten. Während einer Bitratenspitze von z.B. $r_p$ = 5 $r_a$, die etwa für die Zeitspanne $t_{max}$ andauert, werde die Ansprechschwelle $S_2$ gerade noch nicht erreicht; wenn dann danach für einige Zeit keine ATM-Zellen ankommen, wird der Zähler (in einer Zeitspanne von etwa $5 \cdot t_{max}$) auf den Zählerstand 0 dekrementiert sein.
Tritt jedoch während dieser Zeit (im Mittel bei 2,5 $t_{max}$) erneut eine (erlaubte) Bitratenspitze ein, so startet der Zähler (im Mittel bei einem Zählerstand $S_2/2$) erneut und erreicht dann sehr schnell, im Mittel bereits nach einer Zeitspanne $t_{max}/2$, die Ansprechschwelle $S_2$ mit der Folge, daß $S_2/2$ (d.h. einige tausend) ATM-Zellen ungerechtertigterweise eliminiert bzw. markiert werden; noch ungünstiger wird die Situation, wenn mehr als zwei Bitratenspitzen kurzzeitig aufeinanderfolgen.

Die Erfindung zeigt nun einen Weg, die im vorstehenden angeführten Nachteile zu vermeiden.

Die Erfindung betrifft eine Anordnung zur Bitratenüberwachung in ATM-Netzen in einem Dual-Leaky-Bucket-Verfahren, demzufolge

mittels einer ersten Leaky-Bucket-Einheit die konstante Bitrate $r_c$ oder die Spitzenbitrate $r_p = B_z \cdot d_1/T_1$, mit $B_z$ = Anzahl der Bits je ATM-Zelle, $d_1$ = Dekrementierungswert und $T_1$ = Dekrementierungsperiode der ersten Leaky-Bucket-Schaltung, überwacht und die bis zum Ansprechen der ersten Leaky-Bucket-Einheit maximal mögliche Anzahl $n_{max} = S_1 + k \cdot d_1$ von ATM-Zellen in einem full-rate-burst festgelegt wird, mit k = 1 + $\lceil (S_1-d_1)/((T_1/t_z)-d_1) \rfloor$, $S_1$ = Ansprechschwellwert der ersten Leaky-Bucket-Einheit, $t_z$ = Dauer einer ATM-Zelle bei maximaler Ubertragungsgeschwindigkeit, bzw.
mittels einer zweiten Leaky-Bucket-Einheit die mittlere Bitrate $r_a = B_z \cdot d_2/T_2$, mit $d_2$ = Dekrementierungswert und $T_2$ = Dekrementierungsperiode der zweiten Leaky-Bucket-Einheit, überwacht und die maximale Dauer $t_{max} \approx S_2 \cdot B_z/(r_p-r_a)$ eines peak-rate-bursts festgelegt wird, mit $S_2$ = Ansprechschwellwert der zweiten Leaky-Bucket-Einheit; diese Anordnung ist erfindungsgemäß dadurch gekennzeichnet,
daß in der zweiten Leaky-Bucket-Einheit ein erster zähler vorgesehen ist,
daß in der zweiten Leaky-Bucket-Einheit bei dem mit den in der zweiten Leaky-Bucket-Einheit ankommenden ATM-Zellen inkrementierten und mit der Dekrementierungsperiode $T_2$ jeweils um den Dekrementierungswert $d_2$ dekrementierten, den Ansprechschwellwert $S_2$ aufweisenden ersten zähler ein kurz vor dem Ansprechschwellwert liegender Rücksetzschwellwert wirksam ist, bei dessen Unterschreiten der erste zähler auf den Zählerstand 0 rückgesetzt wird,
daß neben diesem ersten Zähler ein mit den in der zweiten Leaky-Bucket-Einheit mit einer Bitrate r ≤ $r_a$ ankommenden ATM-Zellen inkrementierter und mit der Dekrementierungsperiode $T_2$ jeweils um den Dekrementierungswert $d_2$ dekrementierter

zweiter zähler vorgesehen ist, der einen kleineren Ansprechschwellwert $S_2^* < S_2$ als der erste Zähler aufweist, dessen Erreichen ebenso wie das Erreichen des Ansprechschwellwerts des ersten Zählers zu einer Eliminierung bzw. Markierung der überschießenden ATM-Zellen führt,
und daß ein mit den in der zweiten Leaky-Bucket-Einheit mit einer Bitrate $r > r_a$ ankommenden ATM-Zellen inkrementierter und mit einer geglätteten niedrigeren Zellentaktrate dekrementierter dritter Zähler vorgesehen ist, dessen Dekrementierungssignal zugleich den zuvor genannten zweiten Zähler inkrementiert.

Die Erfindung bringt den Vorteil mit sich, in der zweiten Leaky-Bucket-Einheit sowohl mit einem hohen Ansprechschwellwert $S_2$ einer entsprechend hohen zulässigen Dauer $t_{max}$ von peak-rate-bursts ohne ungerechtfertigte Eliminierung bzw. Markierung von ATM-Zellen dicht aufeinanderfolgender peak-rate-bursts Rechnung tragen zu können als auch unzulässige überschreitungen der festgelegten mittleren Bitrate $r_a$ noch relativ schnell feststellen und eine Übertragung überschießender ATM-Zellen vermeiden zu können.

Um dabei einem Teilnehmer die Nichteinhaltung festgelegter Verbindungsparameter zu erschweren, kann in weiterer Ausgestaltung der Erfindung bei einem wiederholten Unterschreiten des bei dem ersten Zähler wirksamen Rücksetzschwellwertes der Zähler auf einen höheren Zählerstand rückgesetzt werden; bei mehrfach wiederholtem Unterschreiten des Rücksetzschwellwertes kann der Zähler auch auf jeweils zunehmend höhere Zählerstände rückgesetzt werden.

Die Taktrate, mit der der zweite Zähler inkrementiert und der dritte Zähler dekrementiert wird, kann gleich der der mittleren Bitrate $r_a$ entsprechenden Zellenrate sein. Es ist aber auch möglich, daß die genannte Taktrate größer als die der mittleren Bitrate $r_a$ entsprechende Zellenrate und kleiner als die der Spitzenbitrate $r_p$ entsprechende Zellenrate ist, insbesondere kleiner als die der Hälfte $r_p/2$ der Spitzenbitrate entsprechende Zellenrate; weiterhin ist es möglich, daß die genannte Zellentaktrate nach Maßgabe des Zählerstandes des dritten Zählers derart eingestellt wird, daß sie bei niederem Zählerstand der mittleren Bitrate, bei höherem Zählerstand einer Bitrate zwischen der mittleren Bitrate und der Spitzenbitrate und bei sehr hohem Zählerstand der Spitzenbitrate entspricht.

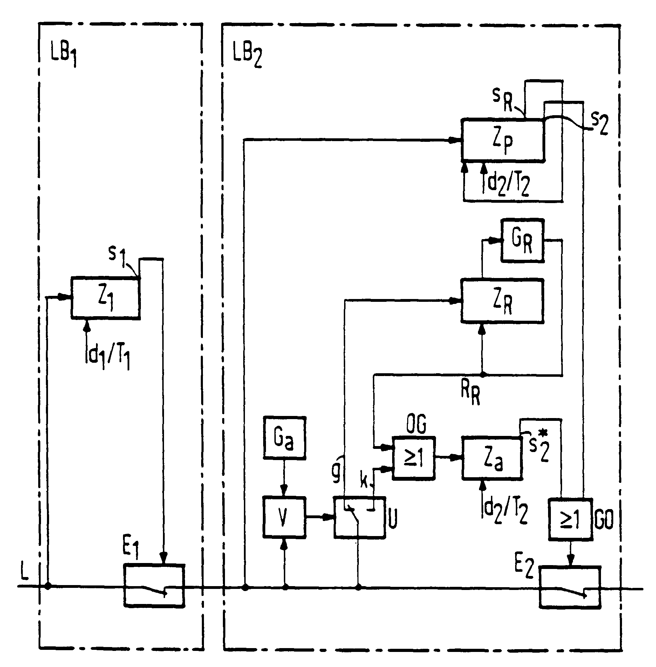

Anhand der Zeichnung sei die Erfindung noch näher erläutert.

Die Zeichnung zeigt schematisch in einem zum Verständnis der Erfindung erforderlichen Umfang eine Policing-Anordnung mit einer Kette von zwei Leaky-Bucket-Einheiten $LB_1$, $LB_2$, die bei Überschreitung festgelegter Parameter eine Eliminierung überschießender ATM-Zellen mit Hilfe zweier entsprechender Eliminierungseinrichtungen $E_1$, $E_2$ bewirken, die in der Zeichnung als in eine die ATM-Zellen führende Leitung L eingefügte Schalter dargestellt sind.

Mittels der ersten Leaky-Bucket-Einheit $LB_1$ möge dabei die Spitzenbitrate $r_p = B_z \cdot d_1/T_1$ (mit $B_z$ = Anzahl der Bits je ATM-Zelle, $d_1$ = Dekrementierungswert und $T_1$ = Dekrementierungsperiode der ersten Leaky-Bucket-Einheit) überwacht und die bis zum Ansprechen der ersten Leaky-Bucket-Einheit maximal mögliche Anzahl $n_{max} = S_1 + k \cdot d_1$ (mit $k = 1 + \lceil (S_1-d_1)/((T_1/t_z)-d_1) \rceil$, $S_1$ = Ansprechschwellwert der ersten Leaky-Bucket-Einheit, $t_z$ = Dauer einer ATM-Zelle bei maximaler Übertragungsgeschwindigkeit) von ATM-Zellen in einem sog. full-rate-burst festgelegt werden. Hierzu ist in der Zeichnung angedeutet, daß die erste Leaky-Bucket-Einheit $LB_1$ einen Zähler $Z_1$ aufweist, der in seinem Zählerstand durch die auf der Zellenleitung L erscheinenden ATM-Zellen inkrementiert und von einem Dekrementierungseingang $d_1/t_1$ her mit einer Dekrementierungsperiode $T_1$ wiederholt jeweils um einen Dekrementierungswert $d_1$ dekrementiert wird. Bei Erreichen eines Ansprechschwellwert $S_1$ gibt der Zähler $Z_1$ von einem entsprechenden Ausgang $s_1$ her einen Eliminierungsbefehl an die Eliminierungseinrichtung $E_1$ ab.

Mittels der zweiten Leaky-Bucket-Einheit wird die mittlere Bitrate $r_a = B_z \cdot d_2/T_2$ (mit $d_2$ = Dekrementierungswert und $T_2$ = Dekrementierungsperiode der zweiten Leaky-Bucket-Einheit) überwacht, und es wird die maximale Dauer $t_{max} \approx S_2 \cdot B_z/(r_p-r_a)$ eines (sog. peak-rate-) Bursts mit der Spitzenbitrate (mit $S_2$ = Ansprechschwellwert der zweiten Leaky-Bucket-Einheit) festgelegt. Hierzu ist in der Zeichnung angedeutet, daß die zweite Leaky-Bucket-Einheit $LB_2$ einen Zähler $Z_p$ aufweist, der in seinem Zählerstand durch die auf der Zellenleitung L nach Passieren der Leaky-Bucket-Einheit $LB_1$ noch erscheinenden ATM-Zellen inkrementiert und von einem Dekrementierungseingang $d_2/t_2$ her mit einer Dekrementierungsperiode $T_2$ wiederholt jeweils um einen Dekrementierungswert $d_2$ dekrementiert wird. Bei Erreichen eines Ansprechschwellwerts $S_2$ gibt der Zähler $Z_p$ von einem entsprechenden Ausgang $s_2$ her einen Eliminierungsbefehl an die Eliminierungseinrichtung $E_2$ ab.

Wie in der Zeichnung weiter angedeutet ist, ist beim Zähler $Z_p$ ein kurz vor dem Ansprechschwellwert $S_2$ liegender Rücksetzschwellwert $S_R$ wirksam, bei dessen Unterschreiten der Zähler $Z_P$ von einem entsprechenden Ausgang $s_R$ her auf den Zählerstand 0 rückgesetzt wird. Es ist auch möglich, daß bei einem wiederholten Unterschreiten des beim Zähler $Z_p$ wirksamen Rücksetzschwellwerts $S_R$ der Zähler $Z_p$ nicht auf den Zählerstand 0, sondern lediglich auf einen höheren Zählerstand rückgesetzt wird, wobei bei mehrfach wiederholtem Unterschreiten des Rücksetzschwellwertes $S_R$ der Zähler $Z_p$ auch auf jeweils zunehmend höhere Zählerstände rückgesetzt werden kann. Ohne daß dies in der Zeichnung noch näher dargestellt ist, kann dazu der Rücksetzschwellwert-Ausgang $s_R$ des Zählers $Z_p$ über eine vom Ausgang $s_R$ her gesteuerte Schrittschalteinrichtung auch zu entsprechenden zusätzlichen Rück-

setzeingängen des Zählers $Z_p$ führen.

Mit Hilfe des Zählers $Z_p$ wird in der zweiten Leaky-Bucket-Einheit $LB_2$ in der oben angegebenen Weise die maximale Dauer $t_{max}$ von peak-rate-bursts überwacht.

Zur Überwachung der mittleren Bitrate $r_a$ ist in der zweiten Leaky-Bucket-Einheit $LB_2$ neben diesem ersten Zähler $Z_p$ ein zweiter Zähler $Z_a$ vorgesehen, der einen kleineren Ansprechschwellwert $S_2^*$ als der erste Zähler $Z_p$ aufweist; bei Erreichen dieses kleineren Ansprechschwellwerts $S_2^*$ kommt es ebenso wie beim Erreichen des Ansprechschwellwerts $S_2$ des ersten Zählers $Z_p$ zu einer Eliminierung bzw. Markierung der überschießenden ATM-Zellen. In der Zeichnung ist dazu angedeutet, daß die entsprechenden Zählerausgänge $s_2$ (beim ersten Zähler Zp) und $s_2^*$ (beim zweiten Zähler Za) über ein ODER-Glied GO zum Steuereingang der Eliminierungseinrichtung $E_2$ führen.

Wie aus der Zeichnung weiter ersichtlich ist, wird auch der zweite Zähler $Z_a$ von einem entsprechenden Dekrementierungseingang $d_2/T_2$ her mit der Dekrementierungsperiode $T_2$ wiederholt jeweils um den Dekrementierungswert $d_2$ dekrementiert. In seinem Zählerstand inkrementiert wird der zweite Zähler $Z_a$ zum einen mit denjenigen in der zweiten Leaky-Bucket-Einheit $LB_2$ ankommenden ATM-Zellen, deren Bitrate die mittlere Bitrate $r_a$ nicht überschreitet. In der Zeichnung ist dazu angedeutet, daß die ATM-Zellen-Leitung (L) über den Ausgang k einer Umschalteinrichtung U und ein nachfolgendes ODER-Glied OG mit dem Zähleingang des zweiten Zählers $Z_a$ verbunden ist. Die Umschalteinrichtung U kann dazu von einem Bitratenvergleicher V her gesteuert werden, der einerseits mit der ATM-Zellen-Leitung (L) und andererseits mit einem Durchschnittsbittakt-Geber $G_a$ verbunden ist.

Der erwähnte kleinere Ansprechschwellwert $S_2^*$ des zweiten Zählers $Z_a$ gestattet es, eine unerlaubte Erhöhung der Durchschnittsbitrate $r_a$ bereits entsprechend früh zu erkennnen. Dabei werden, um ein ungerechtfertigt frühes Erreichen des kleineren Ansprechschwellwerts $S_2^*$ zu vermeiden, diejenigen ATM-Zellen, die in der zweiten Leaky-Bucket-Einheit $LB_2$ mit einer die mittlere Bitrate $r_a$ überschreitenden Bitrate ankommen, nicht unmittelbar zur Inkrementierung des zweiten Zählers $Z_a$ benutzt; vielmehr ist noch ein dritter Zähler $Z_R$ vorgesehen, der in seinem Zählerstand von dem anderen Ausgang g der Umschalteinrichtung U her mit den in der zweiten Leaky-Bucket-Einheit $LB_2$ mit einer Bitrate $r>r_a$ ankommenden ATM-Zellen in seinem Zählerstand inkrementiert wird. Dekrementiert wird dieser dritte Zähler $Z_R$ mit einer geglätteten, d.h. regelmäßig niedrigeren Zellentaktrate $R_R$; dies kann, wie dies auch in der Zeichnung angedeutet ist, mit Hilfe eines entsprechenden Zellentakt-Generators $G_R$ geschehen, der, vom Zähler $Z_R$ her gesteuert, mit der geglätteten Zellentaktrate $R_R$ wiederholt dem Zähler $Z_R$ ein entsprechendes Dekrementierungssignal zuführt. Mit diesem Dekrementierungssignal des dritten Zählers $Z_R$ wird zugleich der zuvor genannte zweite Zähler $Z_a$ in seinem Zählerstand inkrementiert, was in der Zeichnung durch eine entsprechende, zu dem zweiten Eingang des dem Zähleingang des zweiten Zählers $Z_a$ vorgeschalteten ODER-Gliedes OG führende Verbindung $R_R$ angedeutet ist.

Die Zellentaktrate $R_R$ kann dabei gleich der der mittleren Bit-rate $r_a$ entsprechenden ATM-Zellenrate sein; es ist aber auch möglich, daß die Zellentaktrate $R_R$ größer als die der mittleren Bitrate $r_a$ entsprechende Zellenrate und kleiner als die der Spitzenbitrate $r_p$ entsprechende Zellenrate ist, insbesondere kleiner als die der Hälfte der Spitzenbitrate entsprechende Zellenrate. Weiterhin ist es möglich, daß die geglättete Zellentaktrate $R_R$ nach Maßgabe des Zählerstandes des dritten Zählers $Z_R$ derart eingestellt wird, daß sie bei niederem Zählerstand der mittleren Bitrate $r_a$, bei höherem Zählerstand einer Bitrate zwischen der mittleren Bitrate $r_a$ und der Spitzenbitrate $r_p$ und bei sehr hohem Zählerstand der Spitzenbitrate $r_p$ entspricht.

Abschliessend sei noch bemerkt, daß in dem in der Zeichnung dargestellten Ausführungsbeispiel in der zweiten Leaky-Bucket-Einheit $LB_2$ sowohl die Dauer $t_{max}$ von peak-rate-bursts als auch die mittlere Bitrate $r_a$ überwacht wird, daß es alternativ aber auch möglich ist, nur die Dauer $t_{max}$ von peak-rate-bursts oder die mittlere Bitrate $r_a$ zu überwachen, wobei dann in Abweichung von der zeichnerischen Darstellung das ODER-Glied GO und die zu seinem einen oder seinem anderen Eingang führende Zählerschaltung ($Z_a$ mit $Z_R$; $Z_p$) entfällt.

**Patentansprüche**

1. Anordnung zur Bitratenüberwachung in ATM-Netzen in einem Dual-Leaky-Bucket-Verfahren, demzufolge

   mittels einer ersten Leaky-Bucket-Einheit ($LB_1$) die Spitzenbitrate $r_p = B_z \cdot d_1/T_1$ mit $B_z =$ Anzahl der Bits je ATM-Zelle, $d_1 =$ Dekrementierungswert und $T_1 =$ Dekrementierungsperiode der ersten Leaky-Bucket-Schaltung, überwacht und die bis zum Ansprechen der ersten Leaky-Bucket-Einheit ($LB_1$) maximal mögliche Anzahl $n_{max} = S_1 + k \cdot d_1$ von ATM-Zellen in einem full-rate-burst festgelegt wird, mit $k = 1 + \lceil (S_1 - d_1)/((T_1/t_z) - d_1) \rceil$ $S_1 =$ Ansprechschwellwert der ersten Leaky-Bucket-Einheit, $t_z =$ Dauer einer ATM-Zelle bei maximaler Übertragungsgeschwindigkeit, bzw.

   mittels einer zweiten Leaky-Bucket-Einheit ($LB_2$) die mittlere Bitrate $r_a = B_z \, d_2/T_2$, mit $d_2 =$ Dekrementierungswert und $T_2 =$ Dekrementierungsperiode der zweiten Leaky-Bucket-Einheit, überwacht und die maximale Dauer $t_{max} \approx S_2 \cdot B_z/(r_p - r_a)$ eines peak-rate-bursts festgelegt wird, mit $S_2 =$ Ansprechschwellwert der zweiten Leaky-Bucket-Einheit,

**dadurch gekennzeichnet,**

daß in der zweiten Leaky-Bucket-Einheit (LB$_2$) ein erster Zähler (Z$_p$) vorgesehen ist,
daß in der zweiten Leaky-Bucket-Einheit (LB$_2$) bei dem mit den in der zweiten Leaky-Bucket-Einheit (LB$_2$) ankommenden ATM-Zellen inkrementierten und mit der Dekrementierungsperiode T$_2$ jeweils um den Dekrementierungswert d$_2$ dekrementierten, den Ansprechschwellwert S$_2$ aufweisenden ersten Zähler (Z$_p$) ein kurz vor dem Ansprechschwellwert (S$_2$) liegender Rücksetzschwellwert (S$_R$) wirksam ist, bei dessen Unterschreiten der erste Zähler (Z$_P$) auf den Zählerstand 0 rückgesetzt wird,
daß neben diesem ersten Zähler (Z$_p$) ein mit den in der zweiten Leaky-Bucket-Einheit (LB$_2$) mit einer Bitrate $r \leq r_a$ ankommenden ATM-Zellen inkrementierter und mit der Dekrementierungsperiode T$_2$ jeweils um den Dekrementierungswert d$_2$ dekrementierter zweiter Zähler (Z$_a$) vorgesehen ist, der einen kleineren Ansprechschwellwert $S_2^* < S_2$ als der erste Zähler (Z$_p$) aufweist, dessen Erreichen ebenso wie das Erreichen des Ansprechschwellwerts des ersten Zählers (Z$_p$) zu einer Eliminierung bzw. Markierung der überschießenden ATM-Zellen führt,
und daß ein mit den in der zweiten Leaky-Bucket-Einheit (LB$_2$) mit einer Bitrate $r > r_a$ ankommenden ATM-Zellen inkrementierter und mit einer geglätteten Zellentaktrate (R$_R$) dekrementierter dritter Zähler (Z$_R$) vorgesehen ist, dessen Dekrementierungssignal zugleich den zuvor genannten zweiten Zähler (Z$_a$) inkrementiert.

2. Anordnung nach Anspruch 1,
**dadurch gekennzeichnet,**
daß bei einem wiederholten Unterschreiten des bei dem ersten Zähler (Z$_p$) wirksamen Rücksetzschwellwertes (S$_R$) der erste Zähler (Z$_p$) lediglich auf einen höheren Zählerstand rückgesetzt wird.

3. Anordnung nach Anspruch 2,
**dadurch gekennzeichnet,**
daß bei mehrfach wiederholtem Unterschreiten des Rücksetzschwellwertes (S$_R$) der erste Zähler (Z$_p$) auf jeweils zunehmend höhere Zählerstände rückgesetzt wird.

4. Anordnung nach einem der Ansprüche 1 bis 3,
**dadurch gekennzeichnet,**
daß die geglättete Zellentaktrate (R$_R$) gleich der der mittleren Bitrate (r$_a$) entsprechenden Zellenrate ist.

5. Anordnung nach einem der Ansprüche 1 bis 3,
**dadurch gekennzeichnet,**

daß die geglättete Zellentaktrate (R$_R$) größer als die der mittleren Bitrate (r$_a$) entsprechende Zellenrate und kleiner als die der Spitzenbitrate (r$_p$) entsprechende Zellenrate ist.

6. Anordnung nach Anspruch 5,
**dadurch gekennzeichnet,**
daß die geglättete Zellentaktrate (R$_R$) kleiner als die der Hälfte (r$_p$/2) der Spitzenbitrate entsprechende Zellenrate ist.

7. Anordnung nach einem der Ansprüche 1 bis 3,
**dadurch gekennzeichnet,**
daß die geglättete Zellentaktrate (R$_R$) nach Maßgabe des Zählerstandes des dritten Zählers (Z$_R$) derart eingestellt wird, daß sie bei niederem Zählerstand der mittleren Bitrate (r$_a$), bei höherem Zählerstand einer Bitrate zwischen der mittleren Bitrate (r$_a$) und der Spitzenbitrate (r$_p$) und bei sehr hohem Zählerstand der Spitzenbitrate (r$_p$) entspricht.

8. Anordnung nach einem der Ansprüche 1 bis 7,
**dadurch gekennzeichnet,**
daß mittels der zweiten Leaky-Bucket-Einheit (LB$_2$) nur die maximale Dauer (t$_{max}$) eines peak-rate-bursts oder die mittlere Bitrate (r$_a$) überwacht wird.

**Claims**

1. Arrangement for monitoring the bit rate in ATM networks using a dual leaky bucket method, according to which

the peak bit rate $r_p = B_z \cdot d_1 / T_1$, where $B_z$ = number of bits per ATM cell, $d_1$ = decrementation value and $T_1$ = decrementation period of the first leaky bucket circuit, is monitored and the maximum possible number $n_{max} = S_1 + k \cdot d_1$, where $k = 1 + \lceil (S_1 - d_1) / ((T_1/t_z) - d_1) \rceil$, $S_1$ = response threshold of the first leaky bucket unit and $t_z$ = duration of an ATM cell at the maximum transmission speed, of ATM cells in a full-rate burst up until the first leaky bucket unit (LB$_1$) responds is determined by means of a first leaky bucket unit (LB$_1$), and respectively
the medium bit rate $r_a = B_z \, d_2 / T_2$, where $d_2$ = decrementation value and $T_2$ = decrementation period of the second leaky bucket unit, is monitored and the maximum duration $t_{max} \approx S_2 \cdot B_z / (r_p - r_a)$, where $S_2$ = response threshold of the second leaky bucket unit, of a peak-rate burst is determined by means of a second leaky bucket unit (LB$_2$), characterized in that a first counter (Z$_p$) is provided in the second leaky bucket unit (LB$_2$),
in that in the case of the first counter (Z$_p$), which is incremented upon the arrival of the ATM cells in the second leaky bucket unit ($LB_2$) and decremented by the decrementation value $d_2$ in each case upon the decrementation period $T_2$, and which has the response threshold $S_2$, a reset threshold ($S_R$) lying slightly below the response threshold ($S_2$) is operative in the second leaky bucket unit ($LB_2$), the first counter ($Z_p$) being reset to the counter reading 0 if the reading falls below said reset threshold,
in that provided in addition to said first counter ($Z_p$) is a second counter ($Z_a$), which is incremented upon the arrival of the ATM cells in the second leaky bucket unit ($LB_2$) at a bit rate $r \leq r_a$ and is decremented by the decrementation value $d_2$ in each case upon the decrementation period $T_2$, which second counter has a lower response threshold $S_2^* < S_2$ than the first counter ($Z_p$), the reaching of which threshold, just like the reaching of the response threshold of the first counter ($Z_p$), leads to an elimination or marking respectively of the excess ATM cells, and in that a third counter ($Z_R$) is provided, which is incremented upon the arrival of the ATM cells in the second leaky bucket unit ($LB_2$) at a bit rate $r > r_a$ and is decremented with a smoothed cell clock rate ($R_R$), the decrement signal of which third counter simultaneously increments the aforementioned second counter ($Z_a$).

2. Arrangement according to Claim 1, characterized in that if the reading again falls below the reset threshold ($S_R$) operative for the first counter ($Z_p$), the first counter ($Z_p$) is reset only to a higher counter reading.

3. Arrangement according to Claim 2, characterized in that if the reading repeatedly falls below the reset threshold ($S_R$), the first counter ($Z_p$) is reset to in each case increasingly higher counter readings.

4. Arrangement according to one of Claims 1 to 3, characterized in that the smoothed cell clock rate ($R_R$) is equal to the cell rate corresponding to the medium bit rate ($r_a$).

5. Arrangement according to one of Claims 1 to 3, characterized in that the smoothed cell clock rate ($R_R$) is greater than the cell rate corresponding to the medium bit rate ($r_a$) and less than the cell rate corresponding to the peak bit rate ($r_p$).

6. Arrangement according to Claim 5, characterized in that the smoothed cell clock rate ($R_R$) is less than the cell rate corresponding to half ($r_p/2$) of the peak bit rate.

7. Arrangement according to one of Claims 1 to 3, characterized in that the smoothed cell clock rate ($R_R$) is set according to the counter reading of the third counter ($Z_R$) in such a way that it corresponds to the medium bit rate ($r_a$) in the case of a low counter reading, to a bit rate between the medium bit rate ($r_a$) and the peak bit rate ($r_p$) in the case of a higher counter reading, and to the peak bit rate ($r_p$) in the case of a very high counter reading.

8. Arrangement according to one of Claims 1 to 7, characterized in that only the maximum duration ($t_{max}$) of a peak-rate burst or the medium bit rate ($r_a$) is monitored by means of the second leaky bucket unit ($LB_2$).

## Revendications

1. Dispositif de contrôle de débit binaire dans des réseaux ATM dans un procédé Dual-Leaky-Bucket, selon lequel au moyen d'une première unité ($LB_1$) Leaky-Bucket le débit binaire de pointe $r_p = B_z.d_1/T_1$, avec $B_z$ = nombre des bits par cellule ATM, $d_1$ = valeur de décrémentation et $T_1$ = période de décrémentation du premier circuit Leaky-Bucket, est contrôlé et le nombre maximum possible, jusqu'à la réaction de la première unité ($LB_1$) Leaky-Bucket, $n_{max} = S_1 + k.d_1$ de cellules ATM dans un full-rate-burst est déterminé, avec $k = 1 + \lceil [(S_1-d_1)/((T_1/t_z)-d_1)] \rfloor$, $S_1$ = valeur de seuil de réaction de la première unité Leaky-Bucket, $t_z$ = durée d'une cellule ATM à vitesse de transmission maximum, et le débit binaire moyen $r_a = B_z.d_2/T_2$, avec $d_2$ = valeur de décrémentation et $T_2$ = période de décrémentation d'une seconde unité Leaky-Bucket est contrôlé au moyen de la seconde unité ($LB_2$) Leaky-Bucket et la durée maximum $t_{max} \approx S_2.B_z/(r_p - r_a)$ d'un peak-rate-burst est déterminé, avec $S_2$ = valeur de seuil de réaction de la seconde unité Leaky-Bucket,
caractérisé en ce que

il est prévu dans la seconde unité Leaky-Bucket ($LB_2$) un premier compteur ($Z_p$),
dans la seconde unité ($LB_2$) Leaky-Bucket, dans le premier compteur ($Z_p$) incrémenté par les cellules ATM arrivant dans la seconde unité ($LB_2$) Leaky-Bucket et décrémenté à la période $T_2$ de décrémentation respectivement par la valeur de décrémentation $d_2$ et ayant la valeur $S_2$ de seuil de réaction, une valeur ($S_R$) de seuil de réinitialisation, qui est située un peu au-dessous de la valeur ($S_2$) de seuil de réaction et qui provoque la réinitialisation du premier compteur ($Z_p$) à l'état de comptage 0 lorsque l'état de ce compteur passe au-dessous d'elle, est active,
il est prévu outre ce premier compteur ($Z_p$) un

second compteur ($Z_a$) incrémenté par les cellules ATM arrivant dans la seconde unité ($LB_2$) Leaky-Bucket à un débit binaire $r \leq r_a$ et décrémenté à la période $T_2$ de décrémentation respectivement par la valeur $d_2$ de décrémentation et ayant une valeur $S_2^* < S_2$ de seuil de réaction plus petite que celle du premier compteur ($Z_p$), l'atteinte de cette valeur $S_2^*$ de seuil de réaction provoquant, de même que l'atteinte de la valeur de seuil de réaction du premier compteur ($Z_p$), une élimination ou un repérage des cellules ATM excédentaires,

et il est prévu un troisième compteur ($Z_R$) incrémenté par les cellules ATM arrivant dans la seconde unité ($LB_2$) Leaky-Bucket à un débit binaire $r > r_a$ et décrémenté à un débit ($R_R$) de cellules lissé, un signal de décrémentation de ce troisième compteur incrémentant en même temps le second compteur ($Z_a$) mentionné auparavant.

2. Dispositif suivant la revendication 1, caractérisé en ce que
lors d'un passage répété au-dessous de la valeur ($S_R$) de seuil de réinitialisation active pour le premier compteur ($Z_p$), le premier compteur ($Z_p$) est réinitialisé exclusivement à un état de comptage plus grand.

3. Dispositif suivant la revendication 2, caractérisé en ce que
en cas de passages répétés à plusieurs reprises au-dessous de la valeur ($S_R$) de seuil de réinitialisation, le premier compteur ($Z_p$) est réinitialisé à des états de comptage croissants.

4. Dispositif suivant l'une des revendications 1 à 3, caractérisé en ce que
le débit ($R_R$) de cellules lissé est égal au débit de cellule correspondant au débit binaire moyen ($r_a$).

5. Dispositif suivant l'une des revendications 1 à 3, caractérisé en ce que
le débit ($R_R$) de cellules lissé est plus grand que le débit de cellules correspondant au débit binaire moyen ($r_a$) et est plus petit que le débit de cellules correspondant au débit binaire ($r_p$) de pointe.

6. Dispositif suivant la revendication 5, caractérisé en ce que
le débit ($R_R$) de cellules lissé est plus petit que le débit de cellules correspondant à la moitié ($r_p/2$) du débit binaire de pointe.

7. Dispositif suivant l'une des revendications 1 à 3, caractérisé en ce que
le débit ($R_R$) de cellules lissé est réglé en fonction de l'état du troisième compteur ($Z_R$) de telle sorte qu'il corresponde, en cas d'état de comptage bas, au débit binaire moyen ($r_a$), en cas d'état de comptage plus grand, à un débit binaire compris entre le débit binaire moyen ($r_a$) et le débit binaire de pointe ($r_p$) et en cas d'état de comptage très grand au débit binaire ($r_p$) de pointe.

8. Dispositif suivant l'une des revendications 1 à 7, caractérisé en ce que
il n'est contrôlé au moyen de la seconde unité ($LB_2$) Leaky-Bucket que la durée maximum ($t_{max}$) d'un peak-rate-burst ou le débit binaire moyen ($r_a$).